# EUROPEAN PATENT SPECIFICATION

(11) **EP 2 824 347 B1**
(45) Date of publication and mention of the grant of the patent: **14.06.2017**
(21) Application number: 12870598.5
(22) Date of filing: 08.03.2012
(51) Int. Cl.: F16D 23/14

(54) **CLUTCH DEVICE**
KUPPLUNGSVORRICHTUNG
DISPOSITIF D'EMBRAYAGE

(43) Date of publication of application: 14.01.2015
(73) Proprietor: Toyota Jidosha Kabushiki Kaisha, Toyota-shi, Aichi 471-8571 (JP)
(72) Inventor: SATO, Tomohiro, Toyota-shi Aichi 471-8571 (JP); TAKUMI, Masakazu, Toyota-shi Aichi 471-0026 (JP); UENO, Ryo, Toyota-shi Aichi 471-0026 (JP)
(74) Representative: TBK
(86) International application number: PCT/JP2012/055922
(87) International publication number: WO 2013/132627

(56) References cited:
- EP-A1- 1 624 213
- EP-A2- 1 707 836
- DE-A1- 1 922 913
- JP-A- S6 283 512
- JP-A- 2012 021 600
- JP-U- S 616 031
- JP-U- S6 149 137
- US-A- 4 773 516
- US-A- 6 123 181

## Description

### TECHNICAL FIELD

The present invention generally relates to a clutch apparatus according to the preamble of claim 1, and more particularly to a clutch apparatus mounted on a vehicle.

### BACKGROUND ART

Regarding a conventional clutch apparatus, for example, JP 2006-275271 A discloses a release structure for a clutch intended to provide a release structure for a clutch having a boot attached to a support without using special processing.

In the release structure for a clutch disclosed in JP 2006-275271 A, a support is attached to a transaxle case. A clutch release fork is swingably supported by a tip end potion of the support formed to be spherical. To the support, a boot surrounding the same is attached. One end of the boot abuts on the fork, and the other end thereof abuts on the transaxle case.

In addition, JP 02-022414 U1 discloses an attachment structure for a boot intended to prevent formation of a gap between a boot and a knuckle arm and prevent occurrence of abnormal wear, corrosion, and the like at and around a ball joint.

In the attachment structure for a boot disclosed in JP 02-022414 U1, a case and a knuckle arm are coupled by a ball joint. The attitude of the knuckle arm is changed by the ball joint swinging or pivoting with respect to the case. A boot is provided to cover between the case and the knuckle arm to prevent entrance of rainwater, mud, or the like into the ball joint. One end portion of the boot is fixed to the case, and the other end portion of the boot is fitted into a lock groove formed in the ball joint.

EP 1 624 213 A1 discloses a generic clutch apparatus having the features of the preamble of claim 1. US 6 123 181 A discloses a further clutch apparatus.

### SUMMARY OF INVENTION

### TECHNICAL PROBLEM

A structure using a clutch release fork which swings by operation of a clutch by a driver is known as a clutch apparatus which transmits motive power generated in an engine to a transmission or disconnects the motive power from the transmission. In the release structure for a clutch disclosed in JP 2006-275271 A, in order to prevent entrance of foreign matter or water into a slide portion between the clutch release fork and the support supporting the same, the boot as a seal member is provided around the support.

However, depending on the structure of a boot and the attachment structure therefor, a gap may be formed between a boot and a support as a clutch release fork swings. In this case, sufficient sealing properties cannot be ensured for a support point swingably supporting the clutch release fork.

Thus, one object of the present invention is to solve the aforementioned problem, and to provide a clutch apparatus which ensures sufficient sealing properties for a support point swingably supporting a clutch release fork.

### SOLUTION TO PROBLEM

The object is achieved by a clutch apparatus having the features of claim 1. Further advantageous developments are set out in the dependent claims.

With the clutch apparatus configured as described above, by providing the first lip portion to the seal member, a state where the first lip portion is in contact with the release fork support between the slide portion and the constricted portion is obtained when the clutch release fork swings. Thereby, sufficient sealing properties can be ensured for a support point swingably supporting the clutch release fork.

Preferably, the seal member further has a fit portion fitted to the constricted portion. The first lip portion extends from the fit portion toward the release fork support between the slide portion and the constricted portion. With the clutch apparatus configured as described above, by providing the first lip portion to the seal member aside from the fit portion, sufficient sealing properties can be ensured for the support point swingably supporting the clutch release fork.

Preferably, the seal member further has a second lip portion extending from the fit portion toward the clutch release fork and being biased with respect to the clutch release fork.

With the clutch apparatus configured as described above, by providing the second lip portion to the seal member, a state where the second lip portion is in contact with the clutch release fork is obtained when the clutch release fork swings. Thereby, sufficient sealing properties can be ensured for the support point swingably supporting the clutch release fork.

According to the invention, the clutch apparatus further includes a clip member locked in the clutch release fork for preventing the clutch release fork from falling off the release fork support. The clip member is fixed to the release fork support via the seal member. The seal member is subjected to a force from the clip member to be pressed against the release fork support.

With the clutch apparatus configured as described above, by the clip member, the clutch release fork can be prevented from falling off the release fork support, and the seal member can be fixed to the release fork support.

According to the invention, a groove portion into which the clip member is fitted is formed in the seal member. The groove portion is provided not to communicate with the space for sealing the lubricant. With the clutch apparatus configured as described above, sealing properties by the seal member is not impaired due to the formation of the groove portion. Thus, sufficient sealing properties can be ensured for the support point swingably supporting the clutch release fork.

Preferably, the seal member further has a fit portion fitted to the constricted portion. The groove portion is provided in the fit portion to extend on an outer periphery of the constricted portion. With the clutch apparatus configured as described above, the strained force of the fit portion on the constricted portion can be increased by the clip member.

Preferably, the seal member further has a fit portion fitted to the constricted portion. The fit portion includes a third lip portion in contact with the release fork support. With the clutch apparatus configured as described above, a portion between the seal member and the release fork support is sealed not only with the first lip portion but also with the third lip portion. Thus, sufficient sealing properties can be ensured for the support point swingably supporting the clutch release fork.

### ADVANTAGEOUS EFFECTS OF INVENTION

As described above, according to the present invention, a clutch apparatus which ensures sufficient sealing properties for a support point swingably supporting a clutch release fork can be provided.

### BRIEF DESCRIPTION OF DRAWINGS

Fig. 1 is a cross sectional view showing a clutch apparatus in accordance with an embodiment of the present invention.
Fig. 2 is a front view showing the clutch apparatus taken along a line II-II in Fig. 1.
Fig. 3 is a cross sectional view showing the clutch apparatus taken along a line III-III in Fig. 2.
Fig. 4 is a plan view showing a fork detachment prevention clip provided in the clutch apparatus in Fig. 1.
Fig. 5 is a side view showing the fork detachment prevention clip provided in the clutch apparatus in Fig. 1.
Fig. 6 is a cross sectional view showing a state where a clutch release fork swings in the clutch apparatus shown in Fig. 3.
Fig. 7 is a cross sectional view showing an assembly process for the clutch apparatus shown in Fig. 3.
Fig. 8 is a cross sectional view showing a variation of a fork support boot provided in the clutch apparatus in Fig. 1.

### DESCRIPTION OF EMBODIMENTS

An embodiment of the present invention will be described with reference to the drawings. It is noted that, in the drawings referred to below, identical or corresponding members will be designated by the same reference numerals.

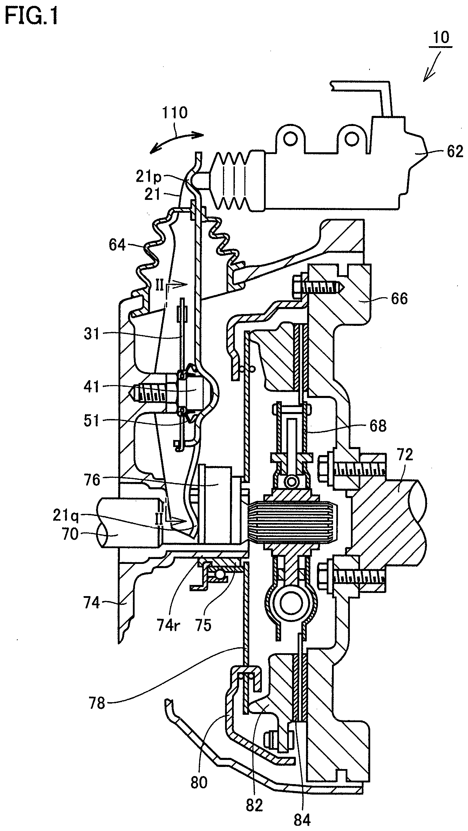

Fig. 1 is a cross sectional view showing a clutch apparatus in accordance with an embodiment of the present invention. Referring to Fig. 1, a clutch apparatus 10 in accordance with the present embodiment is mounted on a vehicle. Clutch apparatus 10 is mounted on a manual transmission vehicle. Clutch apparatus 10 is an apparatus arranged between an engine as a motive power source and a transmission to transmit motive power generated in the engine to the transmission or disconnect the motive power generated in the engine from the transmission.

Firstly, a basic structure of clutch apparatus 10 will be described. Clutch apparatus 10 has a clutch disc 68, a diaphragm spring 78, a pressure plate 82, a clutch cover 80, and a release bearing 76, as components of a clutch body performing an action of interrupting the motive power.

Clutch cover 80, pressure plate 82, and diaphragm spring 78 are fixed to a flywheel 66, and rotate together with a crankshaft 72 of the engine. Clutch cover 80 is provided to cover clutch disc 68, diaphragm spring 78, and pressure plate 82. An opening is formed in clutch cover 80 to expose a central portion of diaphragm spring 78.

Clutch disc 68 has a disc shape. Clutch disc 68 is splined to a clutch shaft 70 on the transmission side at its central portion. Clutch disc 68 has a clutch facing 84 sandwiched between pressure plate 82 and flywheel 66.

Clutch facing 84 is formed of a material which maintains an appropriate friction coefficient, which is excellent in wear resistance and heat resistance, and whose friction coefficient does not change in response to a change in temperature during engagement. More specifically, examples of clutch facing 84 include the one made of resin mold prepared by performing resin treatment on glass fiber, the one made of woven mold, and the one made of semimetal using a metal die and the one made of ceramic for enhancing heat conductivity and strength.

Clutch disc 68 transmits rotation of flywheel 66 to the transmission via clutch shaft 70, by a friction force between clutch facing 84 and flywheel 66.

Diaphragm spring 78 is provided opposite to clutch facing 84 with respect to pressure plate 82. A peripheral edge portion of diaphragm spring 78 is connected to pressure plate 82, and a central portion of diaphragm spring 78 is connected to release bearing 76. Diaphragm spring 78 is provided as a clutch spring for pressing clutch facing 84 toward flywheel 66 via pressure plate 82.

Although the present embodiment has described a structure using diaphragm spring 78 as a clutch spring, the present invention is not limited thereto, and a coil spring may be used instead of diaphragm spring 78.

Pressure plate 82 has a disc shape. Pressure plate 82 is provided between clutch facing 84 and diaphragm spring 78.

When a clutch is engaged, pressure plate 82 presses clutch facing 84 toward flywheel 66 with a uniform force, by an elastic force of diaphragm spring 78. This results in a state where the friction force between clutch facing 84 and flywheel 66 is generated, and the rotation of flywheel 66 is transmitted toward clutch disc 68.

When the clutch is disengaged, release bearing 76 presses the central portion of diaphragm spring 78, and thereby the peripheral edge portion of diaphragm spring 78 is displaced in a direction away from flywheel 66. On this occasion, pressure plate 82 is pulled together with diaphragm spring 78 in the direction away from flywheel 66. This results in a state where the friction force between clutch facing 84 and flywheel 66 is canceled, and the rotation of flywheel 66 is not transmitted toward clutch disc 68.

Clutch apparatus 10 has a release cylinder 62, a clutch release fork 21, a fork detachment prevention clip 31, a release fork support 41, and a fork support boot 51, as components of an operation mechanism for operating the clutch body from a driver's seat.

Release fork support 41 is attached to a clutch housing 74 as a case body. Clutch release fork 21 is supported by release fork support 41 to be swingable in an engagement/disengagement direction of the clutch (a direction indicated by an arrow 110).

Clutch release fork 21 has one end 21p and the other end 21q on both sides of a support point supported by release fork support 41. Clutch release fork 21 extends from the support point supported by release fork support 41 to the outside of clutch housing 74, and extends toward one end 21p. Clutch release fork 21 is covered with a fork boot 64 at a position extending to the outside of clutch housing 74. Release cylinder 62 is connected to one end 21p of clutch release fork 21, and release bearing 76 is connected to the other end 21q of clutch release fork 21. Clutch release fork 21 is provided as a member for moving release bearing 76 in an axial direction of clutch shaft 70.

Fork detachment prevention clip 31 is provided as a clip member for preventing clutch release fork 21 from falling off release fork support 41. Fork support boot 51 is provided as a seal member for sealing a lubricant around release fork support 41 and preventing entrance of foreign matter into the support point of release fork support 41.

A sleeve 75 is inserted on an outer periphery of a retainer portion 74r extending from clutch housing 74. Clutch shaft 70 is inserted inside retainer portion 74r. Release bearing 76 is composed of an outer race supported by sleeve 75, and an inner race in contact with diaphragm spring 78. Release bearing 76 is provided to be movable in the axial direction of clutch shaft 70 with respect to retainer portion 74r.

When a driver depresses a clutch pedal, release cylinder 62 is actuated. Release cylinder 62 presses one end 21p of release fork support 41, and thereby clutch release fork 21 swings using release fork support 41 as the support point. As clutch release fork 21 swings, the other end 21q of clutch release fork 21 presses clutch release bearing 76, and thereby release bearing 76 slides in the direction approaching flywheel 66. Thereby, a state where release bearing 76 presses the central portion of diaphragm spring 78 is obtained, and disengagement of the clutch is performed.

Although the present embodiment has described a structure of a hydraulic clutch in which clutch release fork 21 is driven by release cylinder 62, the present invention is not limited thereto, and may be applied to a so-called cable type clutch in which clutch release fork 21 is pulled by a cable.

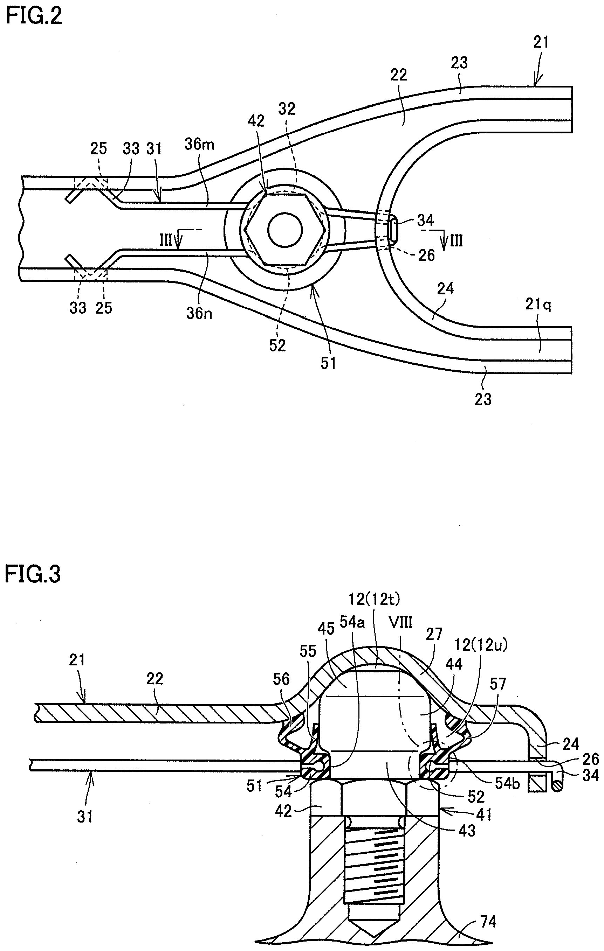

Next, a seal structure in clutch release fork 21 in Fig. 1 will be described in detail. Fig. 2 is a front view showing the clutch apparatus taken along a line II-II in Fig. 1. Fig. 3 is a cross sectional view showing the clutch apparatus taken along a line III-III in Fig. 2.

Referring to Figs. 2 and 3, clutch release fork 21 is formed by pressing a metal plate such as a rolled steel plate.

Clutch release fork 21 has a flat plate portion 22 and folded-back portions 23 and 24. Flat plate portion 22 has a bifurcated shape at a tip end where the other end 21q is arranged. Folded-back portions 23 are formed by folding back outer edge portions of flat plate portion 22. Folded-back portion 24 is formed by folding back an inner edge portion of flat plate portion 22 corresponding to the inner side of the bifurcated shape.

A support receiving portion 27 is formed in flat plate portion 22. Support receiving portion 27 is formed in a concave shape concaved toward flywheel 66 in Fig. 1. Support receiving portion 27 is formed in a curved shape. Clutch release fork 21 is supported with support receiving portion 27 being in contact with release fork support 41.

Cutout portions 25 for inserting the clip are formed in folded-back portions 23. Cutout portions 25 are formed to be located opposite to the other end 21q of clutch release fork 21 with respect to support receiving portion 27. A cutout portion 26 for inserting the clip is formed in folded-back portion 24. Cutout portion 26 is formed at a position corresponding to the bottom of the bifurcated shape of flat plate portion 22. Support receiving portion 27 is arranged between cutout portions 25 and cutout portion 26 in a direction connecting one end 21p and the other end 21q of clutch release fork 21. Cutout portions 25 and cutout portion 26 are formed in the form of through holes penetrating folded-back portions 23 and folded-back portion 24, respectively.

Release fork support 41 is formed of a metal material such as carbon steel. Release fork support 41 extends in a columnar manner from clutch housing 74 toward support receiving portion 27 of clutch release fork 21.

Release fork support 41 has a nut portion 42, a constricted portion 43, an intermediate portion 44, and a slide portion 45. Nut portion 42, constricted portion 43, intermediate portion 44, and slide portion 45 are provided in a line in this order in a direction from clutch housing 74 toward support receiving portion 27 of clutch release fork 21. Constricted portion 43 and slide portion 45 are provided apart from each other with intermediate portion 44 sandwiched therebetween.

Nut portion 42 has an outer peripheral surface formed in a hexagonal shape, and is grasped with a tool when release fork support 41 is fastened to clutch housing 74. Constricted portion 43 has a constricted shape (shape with a reduced diameter) when compared with intermediate portion 44 and nut portion 42 arranged on both sides thereof. Constricted portion 43 cylindrically extends between intermediate portion 44 and nut portion 42. Constricted portion 43 has a constant diameter between intermediate portion 44 and nut portion 42. In a cross section shown in Fig. 3, constricted portion 43 is provided at the same height as that of fork detachment prevention clip 31.

Intermediate portion 44 has a shape having a diameter increased from that of constricted portion 43 and extending toward slide portion 45 while maintaining a substantially constant diameter. In the cross section shown in Fig. 3, intermediate portion 44 is provided between fork detachment prevention clip 31 and support receiving portion 27 of clutch release fork 21.

It is noted that the shape of intermediate portion 44 is not limited to the shape described above, and intermediate portion 44 may have, for example, a shape curved or inclined in an axial direction of release fork support 41.

Slide portion 45 is provided at a tip end of release fork support 41 extending from clutch housing 74 toward support receiving portion 27 of clutch release fork 21. Slide portion 45 has a spherical shape at the tip end of release fork support 41. Slide portion 45 is formed in a curved shape. Slide portion 45 is provided in contact with clutch release fork 21. As clutch release fork 21 swings, slide portion 45 and support receiving portion 27 slide.

Fork support boot 51 is formed of a rubber material, a synthetic resin, or the like. Fork support boot 51 is formed of an elastic material.

Fork support boot 51 is provided around release fork support 41. Fork support boot 51 is provided on an outer periphery of release fork support 41. Fork support boot 51 is provided on outer peripheries of constricted portion 43 and intermediate portion 44. Fork support boot 51 is extended from release fork support 41 toward clutch release fork 21. Fork support boot 51 is fitted to constricted portion 43.

Fork support boot 51 is provided to form space 12 for sealing the lubricant around release fork support 41. The lubricant sealed in space 12 lubricates a slide part between slide portion 45 and support receiving portion 27. Fork support boot 51 serves as the seal member for preventing leak of the lubricant sealed in space 12 and entrance of foreign matter from outside into space 12. In the present embodiment, semifluid grease is sealed in space 12. As space 12, a main space 12t for storing the lubricant is formed between slide portion 45 and support receiving portion 27, and a sub space 12u supplementarily storing the lubricant is formed between intermediate portion 44 and fork support boot 51.

Fork support boot 51 has a fit portion 54, a lip portion 55 as a first lip portion, and a lip portion 56 as a second lip portion.

Fit portion 54 is fitted to constricted portion 43. Fit portion 54 is fitted to constricted portion 43 with a constant strained force. Fit portion 54 has a ring shape provided around the outer periphery of constricted portion 43. Fit portion 54 has an inner peripheral surface 54a and an outer peripheral surface 54b. Inner peripheral surface 54a is in contact with constricted portion 43. Outer peripheral surface 54b is arranged opposite to inner peripheral surface 54a.

A clip passing groove 52 as a groove portion is formed in fit portion 54. Clip passing groove 52 extends in a circumferential direction of the ring shape of fit portion 54. Clip passing groove 52 extends in the circumferential direction on the outer periphery of constricted portion 43. Clip passing groove 52 is formed not to communicate with space 12 in which the lubricant is sealed. Clip passing groove 52 is formed to be open in outer peripheral surface 54b.

Lip portion 56 is provided to seal between fork support boot 51 and clutch release fork 21. Lip portion 56 is provided on the outer periphery of release fork support 41. Lip portion 56 extends from fit portion 54 toward clutch release fork 21, and makes contact with clutch release fork 21. A bellows portion 57 is formed in lip portion 56. Bellows portion 57 is formed by bending lip portion 56 between fit portion 54 and a position in contact with clutch release fork 21. A tip end of lip portion 56 is biased with respect to clutch release fork 21 by an elastic force generated in bellows portion 57.

Although single-step bellows portion 57 is formed in lip portion 56 in Fig. 3, the present invention is not limited thereto, and plural-step bellows portion 57 may be formed by bending lip portion 56 a plurality of times.

Lip portion 55 is provided to seal between fork support boot 51 and release fork support 41. Lip portion 55 is provided on the outer periphery of release fork support 41. Lip portion 55 extends from fit portion 54, and makes contact with release fork support 41 between slide portion 45 and constricted portion 43. Lip portion 55 extends from fit portion 54, and makes contact with intermediate portion 44.

Lip portion 55 extends from fit portion 54, and extends toward intermediate portion 44 while reducing its diameter. A tip end of lip portion 55 is biased with respect to release fork support 41 by lip portion 55 being pushed and expanded by fork support boot 51.

The length of lip portion 55 extending from fit portion 54 is smaller than the length of lip portion 56 extending from fit portion 54. Lip portion 56 is provided on an outer periphery of lip portion 55. Lip portion 55 is provided in a space surrounded by fit portion 54, lip portion 56, clutch release fork 21, and release fork support 41. Sub space 12u is formed at a position surrounded by lip portion 55, lip portion 56, clutch release fork 21, and release fork support 41.

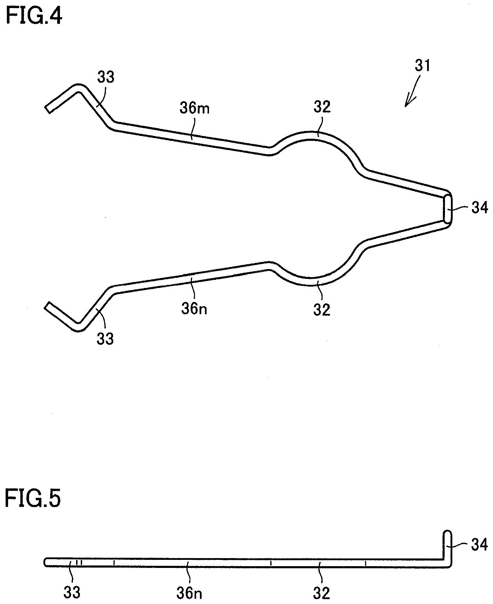

Fig. 4 is a plan view showing the fork detachment prevention clip provided in the clutch apparatus in Fig. 1. Fig. 5 is a side view showing the fork detachment prevention clip provided in the clutch apparatus in Fig. 1.

Referring to Figs. 4 and 5, fork detachment prevention clip 31 is formed of a metal material having an elastic force. Fork detachment prevention clip 31 has a substantially V shape in which a pair of arm portion 36m and arm portion 36n intersect with each other. When fork detachment prevention clip 31 is deformed to have a smaller intersection angle between arm portion 36m and arm portion 36n, fork detachment prevention clip 31 generates an elastic force in a direction in which arm portion 36m and arm portion 36n move away from each other.

Lock portions 33 and 34 and seal fixing portions 32 are formed in fork detachment prevention clip 31.

Lock portions 33 are formed at tip ends of arm portion 36m and arm portion 36n. Each lock portion 33 is formed in one of arm portion 36m and arm portion 36n to protrude in a direction away from the other of arm portion 36m and arm portion 36n. Lock portion 34 is formed at a position where arm portion 36m and arm portion 36n intersect with each other, that is, the bottom of the V shape of fork detachment prevention clip 31. Lock portion 34 is formed to be bent in a direction perpendicular to an extending direction of arm portion 36m and arm portion 36n.

Seal fixing portions 32 are formed in arm portion 36m and arm portion 36n to be located between lock portion 34 and lock portions 33. Each seal fixing portion 32 is formed in one of arm portion 36m and arm portion 36n to protrude in the direction away from the other of arm portion 36m and arm portion 36n. Each seal fixing portion 32 is formed to be curved in an arc shape.

Referring to Figs. 2 and 3, fork detachment prevention clip 31 is arranged on flat plate portion 22 between two folded portions 23, in a deformed state to have a smaller intersection angle between arm portion 36m and arm portion 36n. Lock portions 33 are fitted into cutout portions 25, and lock portion 34 is fitted into cutout portion 26, and thereby fork detachment prevention clip 31 is locked in clutch release fork 21.

On this occasion, fork detachment prevention clip 31 is provided to sandwich release fork support 41 between arm portion 36m and arm portion 36n. Seal fixing portions 32 are arranged in clip passing groove 52. With such a configuration, fork detachment prevention clip 31 exerts a force on fork support boot 51 in a direction pressing fork support boot 51 toward release fork support 41. Fork detachment prevention clip 31 is fixed to release fork support 41 via fork support boot 51.

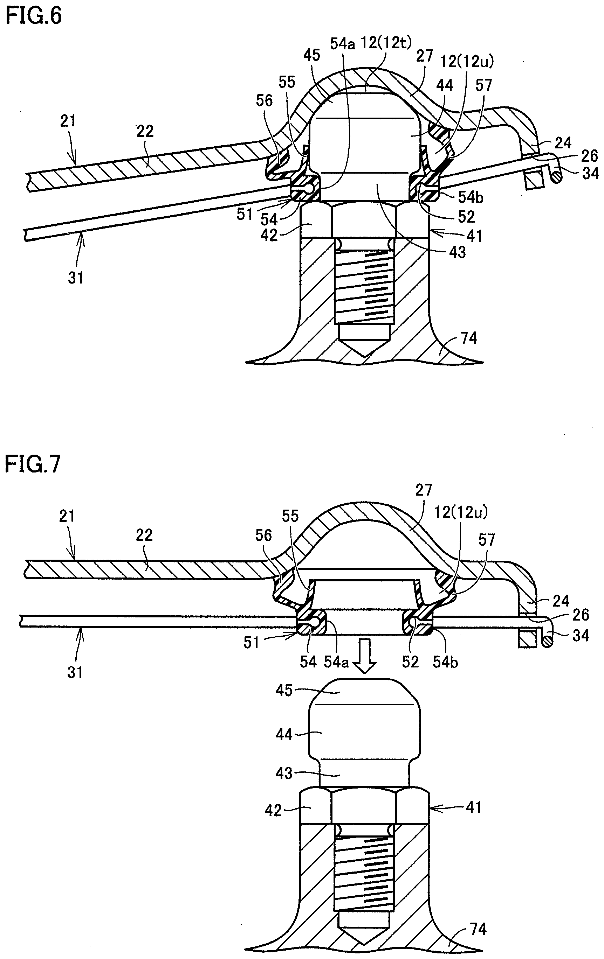

Next, function and effect exhibited by clutch apparatus 10 in accordance with the present embodiment will be described. Fig. 6 is a cross sectional view showing a state where the clutch release fork swings in the clutch apparatus shown in Fig. 3.

Referring to Fig. 6, when clutch release fork 21 swings, the state of contact between constricted portion 43 of release fork support 41 and fit portion 54 of fork support boot 51 may vary due to a change in the inclination of clutch release fork 21 and fork detachment prevention clip 31. In this case, there arises a concern that a minute gap may be formed between constricted portion 43 and fit portion 54 and sealing properties between fork support boot 51 and release fork support 41 may be impaired.

In response, in clutch apparatus 10 in accordance with the present embodiment, fork support boot 51 is provided with lip portion 55 in contact with release fork support 41 between slide portion 45 and constricted portion 43. With such a configuration, even if clutch release fork 21 swings, a state where the tip end of lip portion 55 biases release fork support 41 is obtained by an elastic force of lip portion 55. Thereby, the sealing properties between fork support boot 51 and release fork support 41 can be maintained high.

Further, in the present embodiment, the strained force of fit portion 54 on constricted portion 43 is increased by fork detachment prevention clip 31. This can cause fit portion 54 to further contribute to the enhancement of the sealing properties between fork support boot 51 and release fork support 41. Specifically, in the present embodiment, two-stage sealing means, that is, lip portion 55 and fit portion 54 are provided to enhance the sealing properties between fork support boot 51 and release fork support 41.

In providing fork detachment prevention clip 31, clip passing groove 52 in fork support boot 51 in which seal fixing portions 32 of fork detachment prevention clip 31 are arranged is provided not to communicate with space 12 for sealing the lubricant. This can prevent the lubricant in space 12 from leaking through clip passing groove 52.

On the other hand, irrespective of the swing of clutch release fork 21, lip portion 56 is biased with respect to clutch release fork 21 by the elastic force generated in bellows portion 57. Therefore, sealing properties between fork support boot 51 and clutch release fork 21 is sufficiently ensured by lip portion 56.

Further, in the present embodiment, fork detachment prevention clip 31 is fixed to release fork support 41 via fork support boot 51. With such a configuration, both the effect of preventing clutch release fork 21 from falling off release fork support 41 and the effect of fixing fork support boot 51 to release fork support 41 can be obtained by fork detachment prevention clip 31.

Fig. 7 is a cross sectional view showing an assembly process for the clutch apparatus shown in Fig. 3. Referring to Fig. 7, in the assembly process for clutch apparatus 10, firstly, a sub assy composed of clutch release fork 21, fork detachment prevention clip 31, and fork support boot 51 is assembled. Then, the sub assy is assembled to release fork support 41 fastened to clutch housing 74.

On this occasion, since fork support boot 51 and fork detachment prevention clip 31 are elastic bodies, they are easily expanded. Fit portion 54 of fork support boot 51 is fitted to constricted portion 43 while being pushed and expanded by spherical slide portion 45. With such an assembly process, assembly workability can be improved, and damage to fork support boot 51 caused when the sub assy is assembled to release fork support 41 can be reduced.

The structure of clutch apparatus 10 in accordance with the embodiment of the present invention that has been described above will now be summarized. Clutch apparatus 10 in accordance with the present embodiment includes release fork support 41, clutch release fork 21 swinging in an engagement/disengagement direction of a clutch using release fork support 41 as a support point, and fork support boot 51 as the seal member extended from release fork support 41 toward clutch release fork 21 and forming space 12 for sealing a lubricant around release fork support 41. Release fork support 41 has spherical slide portion 45 sliding with clutch release fork 21, and constricted portion 43 which is provided at a position away from slide portion 45 and to which fork support boot 51 is fitted. Fork support boot 51 has lip portion 55 as the first lip portion in contact with release fork support 41 between slide portion 45 and constricted portion 43.

With clutch apparatus 10 in accordance with the embodiment of the present invention configured as described above, by providing lip portion 55 to fork support boot 51, the sealing properties between fork support boot 51 and release fork support 41 can be maintained high even if clutch release fork 21 swings. This can eliminate abnormal noise during operation of the clutch and deterioration in operability, and improve vehicle quality.

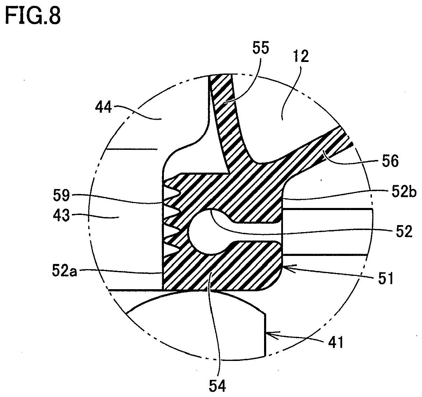

Fig. 8 is a cross sectional view showing a variation of the fork support boot provided in the clutch apparatus in Fig. 1. Fig. 8 shows a cross sectional shape of the clutch apparatus corresponding to the range surrounded by VIII in Fig. 3.

Referring to Fig. 8, in the present variation, fork support boot 51 further has a lip portion 59 as a third lip portion. Lip portion 59 is formed in a surface of fit portion 54 in contact with release fork support 41, that is, inner peripheral surface 54a of fit portion 54. With such a configuration, the sealing properties between fork support boot 51 and release fork support 41 can be further enhanced.

It should be understood that the embodiment disclosed herein is illustrative and non-restrictive in every respect. The scope of the present invention is defined by the scope of the claims, rather than the description above, and is intended to include any modifications within the scope and meaning equivalent to the scope of the claims.

### INDUSTRIAL APPLICABILITY

The present invention is mainly applied to a clutch apparatus for a manual transmission vehicle.

### REFERENCE SIGNS LIST

10: clutch apparatus; 12: space; 12t: main space; 12u: sub space; 21: clutch release fork; 21p: one end; 21q: the other end; 22: flat plate portion; 23, 24: folded-back portion; 31: fork detachment prevention clip; 32: seal fixing portion; 33, 34: lock portion; 36m, 36n: arm portion; 41: release fork support; 42: nut portion; 43: constricted portion; 44: intermediate portion; 45: slide portion; 51: fork support boot; 52: clip passing groove; 54: fit portion; 54a: inner peripheral surface; 54b: outer peripheral surface; 55, 56, 59: lip portion; 57: bellows portion; 62: release cylinder; 64: fork boot; 66: flywheel; 68: clutch disc; 70: clutch shaft; 72: crankshaft; 74: clutch housing; 76: release bearing; 78: diaphragm spring; 80: clutch cover; 82: pressure plate; 84: clutch facing.

## Claims

1. A clutch apparatus, comprising:
a release fork support (41);
a clutch release fork (21) swinging in an engagement/disengagement direction of a clutch using said release fork support (41) as a support point; and
a seal member (51) extended from said release fork support (41) toward said clutch release fork (21) and forming a space (12) for sealing a lubricant around said release fork support (41);
a clip member (31) locked in said clutch release fork (21) for preventing said clutch release fork (21) from falling off said release fork support (41),
wherein said release fork support (41) has a spherical slide portion (45) sliding with said clutch release fork (21), and a constricted portion (43) which is provided at a position away from said slide portion (45) and to which said seal member (51) is fitted,
said seal member (51) has a first lip portion (55) in contact with said release fork support (41) between said slide portion (45) and said constricted portion (43), and
said clip member (31) is fixed to said release fork support (41) via said seal member (51),
**characterized in that**
said seal member (51) is subjected to a force from said clip member (31) to be pressed against said release fork support (41),
a groove portion (52) into which said clip member (31) is fitted is formed in said seal member (51), and
said groove portion (52) is provided not to communicate with said space (12) for sealing the lubricant.

2. The clutch apparatus according to claim 1, wherein
said seal member (51) further has a fit portion (54) fitted to said constricted portion (43), and
said first lip portion (55) extends from said fit portion (54) toward said release fork support (41) between said slide portion (45) and said constricted portion (43).

3. The clutch apparatus according to claim 2, wherein said seal member (51) further has a second lip portion (56) extending from said fit portion (54) toward said clutch release fork (21) and being biased with respect to said clutch release fork (21).

4. The clutch apparatus according to claim 1, wherein
said seal member (51) further has a fit portion (54) fitted to said constricted portion (43), and
said groove portion (52) is provided in said fit portion (54) to extend on an outer periphery of said constricted portion (43).

5. The clutch apparatus according to claim 1, wherein
said seal member (51) further has a fit portion (54) fitted to said constricted portion (43), and
said fit portion (54) includes a third lip portion (59) in contact with said release fork support (41).

## Patentansprüche

1. Kupplungsvorrichtung mit:
einer Ausrückgabelstütze (41);
einer Kupplungsausrückgabel (21), die in eine Eingriffs-/Ausrückungsrichtung einer Kupplung schwenkt, die die Ausrückgabelstütze (41) als einen Stützpunkt verwendet; und
einem Dichtungsbauteil (51), das sich von der Ausrückgabelstütze (41) in Richtung der Kupplungsausrückgabel (21) erstreckt und einen Raum (12) zum Abdichten eines Schmiermittels um die Ausrückgabestütze (41) ausbildet;
einem Klammerbauteil (31), das in der Kupplungsausrückgabel (21) arretiert ist, um die Kupplungsausrückgabel (21) von einem Abfallen von der Ausrückgabelstütze (41) zu hindern,
wobei die Ausrückgabelstütze (41) einen kugelförmigen Gleitabschnitt (45), der mit der Kupplungsausrückgabel (21) gleitet, und einen eingeengten Abschnitt (43) hat, der an einer Position vorgesehen ist, die von dem Gleitabschnitt (45) entfernt ist, und an dem das Dichtungsbauteil (51) gepasst ist,
das Dichtungsbauteil (51) einen ersten Lippenabschnitt (55) hat, der mit der Ausrückgabelstütze (41) zwischen dem Gleitabschnitt (45) und dem eingeengten Abschnitt (43) in Kontakt ist, und
das Klammerbauteil (31) an der Ausrückgabelstütze (41) über das Dichtungsbauteil (51) fixiert ist,
**dadurch gekennzeichnet, dass**
das Dichtungsbauteil (51) einer Kraft von dem Klammerbauteil (31) ausgesetzt ist, um gegen die Ausrückgabelstütze (41) gedrückt zu werden,
ein Nutabschnitt (52), in den das Klammerbauteil (31) gepasst ist, in dem Dichtungsbauteil (51) ausgebildet ist, und
der Nutabschnitt (52) vorgesehen ist, um mit dem Raum (12) zum Abdichten des Schmiermittels nicht in Verbindung zu stehen.

2. Kupplungsvorrichtung gemäß Anspruch 1, wobei
das Dichtungsbauteil (51) des Weiteren einen Passabschnitt (54) hat, der an den eingeengten Abschnitt (43) gepasst ist, und
der erste Lippenabschnitt (55) sich von dem Passabschnitt (54) in Richtung der Ausrückgabelstütze (41) zwischen dem Gleitabschnitt (45) und dem eingeengten Abschnitt (43) erstreckt.

3. Kupplungsvorrichtung gemäß Anspruch 2, wobei das Dichtungsbauteil (51) des Weiteren einen zweiten Lippenabschnitt (56) hat, der sich von dem Passabschnitt (44) in Richtung der Kupplungsausrückgabel (21) erstreckt und bezüglich der Kupplungsausrückgabel (21) vorgespannt ist.

4. Kupplungsvorrichtung gemäß Anspruch 1, wobei
das Dichtungsbauteil (51) des Weiteren einen Passabschnitt (54) hat, der an den eingeengten Abschnitt (43) gepasst ist, und
der Nutabschnitt (52) in dem Passabschnitt (54) vorgesehen ist, um sich an einem Außenumfang des eingeengten Abschnitts (43) zu erstrecken.

5. Kupplungsvorrichtung gemäß Anspruch 1, wobei
das Stützbauteil (51) des Weiteren einen ersten Passabschnitt (54) hat, der an den eingeengten Abschnitt (43) gepasst ist, und
der Passabschnitt (54) einen dritten Lippenabschnitt (59) enthält, der mit der Ausrückgabelstütze (41) in Kontakt ist.

## Revendications

1. Appareil d'embrayage comprenant :
un support de fourchette de débrayage (41) ;
une fourchette de débrayage d'embrayage (21) oscillant dans une direction de mise en prise/dégagement d'un embrayage utilisant ledit support de fourchette de débrayage (41) en tant que point de support ; et
un élément formant joint d'étanchéité (51) étendu à partir dudit support de fourchette de débrayage (41) vers ladite fourchette de débrayage d'embrayage (21) et formant un espace (12) pour sceller un lubrifiant autour dudit support de fourchette de débrayage (41) ;
un élément formant attache (31) verrouillé dans ladite fourchette de débrayage d'embrayage (21) pour empêcher ladite fourchette de débrayage d'embrayage (21) de se détacher dudit support de fourchette de débrayage (41),
dans lequel ledit support de fourchette de débrayage (41) a une partie de coulissement sphérique (45) coulissant avec ladite fourchette de débrayage d'embrayage (21), et une partie rétrécie (43) qui est prévue dans une position à distance de ladite partie de coulissement (45) et sur laquelle ledit élément formant joint d'étanchéité (51) est monté,
ledit élément formant joint d'étanchéité (51) a une première partie de lèvre (55) en contact avec ledit support de fourchette de débrayage (41) entre ladite partie de coulissement (45) et ladite partie rétrécie (43), et
ledit élément formant attache (31) est fixé sur ledit support de fourchette de débrayage (41) via ledit élément formant joint d'étanchéité (51),
**caractérisé en ce que**
ledit élément formant joint d'étanchéité (51) est soumis à une force provenant dudit élément formant attache (31) pour être comprimé contre ledit support de fourchette de débrayage (41),
une partie de rainure (52) dans laquelle ledit élément formant attache (31) est monté, est formée dans ledit élément formant joint d'étanchéité (51), et
ladite partie de rainure (52) est prévu pour ne pas communiquer avec ledit espace (12) pour sceller le lubrifiant.

2. Appareil d'embrayage selon la revendication 1, dans lequel
ledit élément formant joint d'étanchéité (51) a en outre une partie de montage (54) montée sur ladite partie rétrécie (43), et
ladite première partie de lèvre (55) s'étend à partir de ladite partie de montage (54) vers ledit support de fourchette de débrayage (41) entre ladite partie de coulissement (45) et ladite partie rétrécie (43).

3. Appareil d'embrayage selon la revendication 2, dans lequel ledit élément formant joint d'étanchéité (51) a en outre une deuxième partie de lèvre (56) s'étendant à partir de ladite partie de montage (54) vers ladite fourchette de débrayage d'embrayage (21) et étant sollicitée par rapport à ladite fourchette de débrayage d'embrayage (21).

4. Appareil d'embrayage selon la revendication 1, dans lequel
ledit élément formant joint d'étanchéité (51) a en outre une partie de montage (54) montée sur ladite partie rétrécie (43), et
ladite partie de rainure (52) est prévue dans ladite partie de montage (54) pour s'étendre sur une périphérie externe de ladite partie rétrécie (43).

5. Appareil d'embrayage selon la revendication 1, dans lequel
ledit élément formant joint d'étanchéité (51) a en outre une partie de montage (54) montée sur ladite partie rétrécie (43), et
ladite partie de montage (54) comprend une troisième partie de lèvre (59) en contact avec ledit support de fourchette de débrayage (41).
